# DEMANDE DE BREVET EUROPEEN

(11) **EP 3 249 793 A1**
(43) Date de publication de la demande: **29.11.2017**
(21) Numéro de dépôt: 17172228.3
(22) Date de dépôt: 22.05.2017
(51) Int. Cl.: H02K 23/02, H02K 1/12, H02K 3/18, H02K 1/14

(54) **DÉMARREUR DE VEHICULE AUTOMOBILE MUNI D'UN STATOR À PERFORMANCES MAGNÉTIQUES AMÉLIORÉES**

(30) Priorité: 27.05.2016 FR 1654821
(71) Demandeur: VALEO EQUIPEMENTS ELECTRIQUES MOTEUR, 94046 Créteil Cedex (FR)
(72) Inventeur: LABBE, Nicolas, 38070 Isle d'Abeau (FR); VERNAY, Eric, 38070 Isle d'Abeau (FR); DROZDEK, Marius, 38070 Isle d'Abeau (FR); METRAL, Jean Sébastien, 38070 Isle d'Abeau (FR); FONTCHASTAGNER, Julien, 38070 Isle d'Abeau (FR); BAZHAR, Sara, 38070 Isle d'Abeau (FR); TAKORABET, Noureddine, 38070 Isle d'Abeau (FR)
(74) Mandataire: Duprez, Richard

(57) **Abrégé**

L'invention porte principalement sur un démarreur pour moteur thermique d'un véhicule automobile comportant:
- un stator (3) inducteur comprenant une culasse (31) et des noyaux polaires (32) s'étendant radialement par rapport à une périphérie interne de la culasse (31) en direction d'un axe (Y) de ladite culasse (31), et
- un bobinage (46),
caractérisé en ce que deux noyaux polaires (32) adjacents sont décalés axialement l'un par rapport à l'autre, et en ce que ledit bobinage (46) présente des ondulations axiales (47) de façon à passer entre lesdits noyaux polaires (32), ledit bobinage (46) étant formé par une bande (52) enroulée sur plusieurs spires (S1-S3) de manière spirale, ladite bande (52) comportant des échancrures (53) ouvertes alternativement d'un côté et de l'autre dudit stator (3) pour former lesdites ondulations axiales (47) dudit bobinage (46).

## Description

La présente invention porte sur un démarreur de véhicule automobile muni d'un stator à performances magnétiques améliorées.

On connaît des démarreurs pour véhicule automobile munis d'un stator, ou inducteur, et d'un rotor, ou induit, séparé du stator par l'intermédiaire d'un entrefer.

Le corps du rotor consiste en un paquet de tôles présentant des encoches longitudinales dans lesquelles sont insérés les fils du bobinage constitués par exemple par des conducteurs en forme d'épingle. Le rotor est pourvu en outre d'un collecteur comprenant une pluralité de pièces de contact connectées électriquement aux fils du bobinage.

Par ailleurs, le stator comporte un corps muni d'une culasse et de masses polaires réparties angulairement de manière régulière sur la face interne de la culasse. Dans les architectures classiques, des bobines enroulées autour des masses polaires sont destinées à être parcourues par un courant de manière à créer une alternance de pôles nord et de pôles sud.

L'invention vise à améliorer les performances magnétiques du système en proposant un démarreur pour moteur thermique d'un véhicule automobile comportant:
- un stator inducteur comprenant une culasse et des noyaux polaires s'étendant radialement par rapport à une périphérie interne de ladite culasse en direction d'un axe de ladite culasse, et
- un bobinage,
caractérisé en ce que deux noyaux polaires adjacents sont décalés axialement l'un par rapport à l'autre, et en ce que ledit bobinage présente des ondulations axiales de façon à passer entre lesdits noyaux polaires, ledit bobinage étant formé par une bande enroulée sur plusieurs spires de manière spirale, ladite bande comportant des échancrures ouvertes alternativement d'un côté et de l'autre dudit stator pour former lesdites ondulations axiales dudit bobinage.

L'invention permet ainsi, grâce à l'utilisation combinée des noyaux polaires décalés axialement et du bobinage ondulé, de maximiser le remplissage en matière active du stator et donc d'améliorer les performances globales électromagnétiques de la machine électrique tournante du démarreur, en particulier le niveau de couple moteur maximal, et le niveau de résistance électrique minimale pour un niveau d'ampères-tours donné afin d'exciter les pôles.

Selon une réalisation, une largeur desdites échancrures varie d'une spire à l'autre dudit bobinage. Cela permet aux différentes spires de la bande enroulée de s'adapter à la dimension radiale des noyaux polaires.

Selon une réalisation, lesdits noyaux polaires sont prolongés chacun par une semelle, lesdites semelles s'étendant alternativement axialement d'un côté et de l'autre dudit stator. On obtient ainsi une configuration de stator à griffes permettant d'améliorer le rendement de la machine en facilitant son refroidissement du fait de la moindre résistance électrique obtenue pour un niveau atteint en ampères-tours.

Selon une réalisation, lesdites semelles présentent des bords latéraux convergents dans une direction opposée à celle desdits noyaux polaires.

Selon une réalisation, ladite bande est réalisée en aluminium ou en cuivre. L'aluminium présente l'avantage d'être facile à découper et à déformer pour obtenir l'enroulement de spires.

Selon une réalisation, ledit bobinage correspond à un enroulement global de trois spires de ladite bande montées électriquement en série. Les trois spires sont ainsi formées par une seule et même pièce.

Selon une réalisation, ladite bande est recouverte d'un matériau électriquement isolant. Cela permet d'isoler électriquement le bobinage par rapport aux noyaux polaires et à la culasse du stator.

Selon une réalisation, ledit matériau électriquement isolant est constitué par de l'émail et/ou un papier isolant.

Selon une réalisation, lesdits noyaux polaires présentent des flancs latéraux d'extension longitudinales convergents en direction dudit axe de ladite culasse.

Selon une réalisation, lesdits noyaux polaires présentent chacun un bord d'extrémité arrondi du côté d'une zone de contact avec ledit bobinage. Cela permet de diminuer la longueur du trajet efficace des lignes de champ de la densité de courant. On réduit ainsi la résistance du bobinage à travers le volume total de l'enroulement inducteur.

Selon une réalisation, une section de portions internes dudit bobinage situées entre deux noyaux polaires adjacents et une section de portions de liaison dudit bobinage reliant électriquement entre elles deux portions internes adjacentes sont différentes l'une par rapport l'autre.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue schématique de côté d'un démarreur selon la présente invention;
La figure 2 est une vue en perspective de la machine électrique tournante à noyaux polaires chevauchés selon la présente invention;
La figure 3 est une vue éclaté de la machine électrique tournante à noyaux polaires chevauchés selon la présente invention;
La figure 4 est une vue en perspective de l'assemblage entre le bobinage et les noyaux polaires chevauchés selon la présente invention;
La figure 5 est une vue en coupe longitudinale du bobinage et d'un noyau polaire correspondant;
La figure 6a est une vue en perspective du bobinage selon la présente invention;
La figure 6b est une vue de la bande conductrice utilisée pour former le bobinage par enroulement en spiral suivant plusieurs spires;
Les figures 7a et 7b sont des courbes caractéristiques du démarreur représentant le couple généré en fonction du courant respectivement pour un stator à noyaux polaires non chevauchés selon l'état de la technique et à noyaux polaires chevauchés selon l'invention;
La figure 8 est une vue en développement linéaire d'une variante de réalisation des noyaux polaires selon l'invention;
La figure 9 est une vue en développement linéaire d'une variante de réalisation du bobinage selon l'invention.

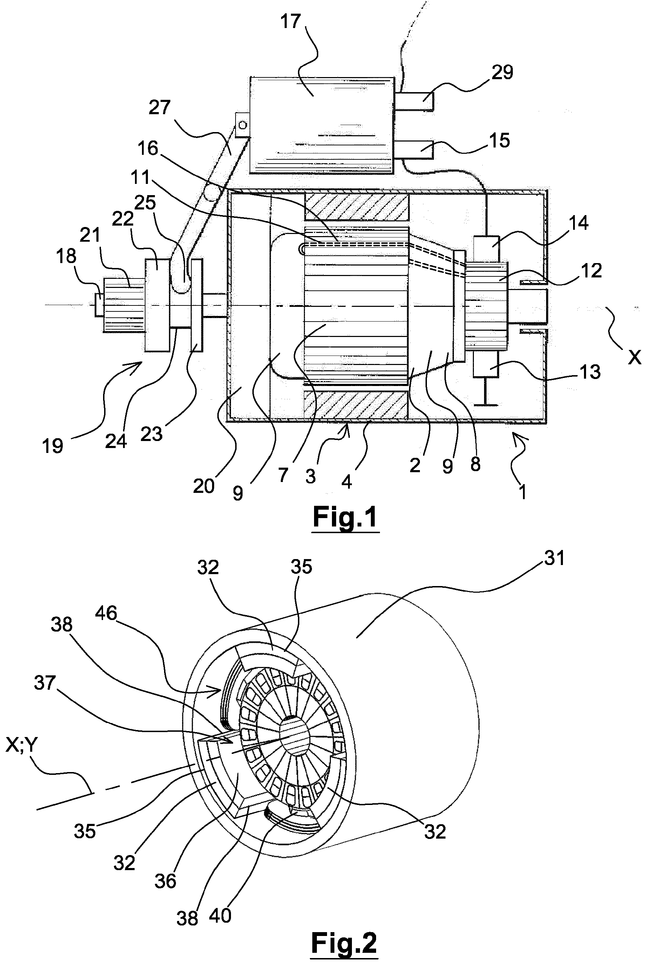

Les éléments identiques, similaires ou analogues conservent les mêmes références d'une figure à l'autre. Dans la description qui suit, une orientation d'avant en arrière correspond à une orientation de droite à gauche sur la figure 1. Ainsi, un côté avant d'une pièce est tourné vers le pignon tandis que le côté arrière de la pièce est tourné vers le collecteur du démarreur.

On a représenté schématiquement sur la figure 1 un démarreur 1 pour moteur à combustion interne de véhicule automobile. Ce démarreur 1 à courant continu comprend, d'une part, un rotor 2 induit pouvant tourner autour d'un axe X, et d'autre part, un stator 3 inducteur positionné autour du rotor 2. Le stator 3 est monté à l'intérieur d'un carter 4.

Le rotor 2 comporte un corps de rotor 7 et un bobinage 8 inséré dans des encoches du corps de rotor 7. Le corps de rotor 7 consiste en un paquet de tôles présentant des encoches longitudinales 16. Pour former le bobinage 8, des fils conducteurs en forme d'épingle 11 sont enfilés à l'intérieur des encoches 16 généralement sur deux couches distinctes. Le bobinage 8 forme, de part et d'autre du corps de rotor 7, des chignons 9.

Le rotor 2 est pourvu d'un collecteur 12 comprenant une pluralité de pièces de contact connectées électriquement aux éléments conducteurs, formés dans l'exemple considéré par les épingles 11 du bobinage 8.

Un groupe de balais 13 et 14 est prévu pour l'alimentation électrique du bobinage 8, l'un des balais 13 étant relié à la masse du démarreur 1 et un autre des balais 14 étant relié à une borne électrique 15 d'un contacteur 17.

Les balais 13 et 14 viennent frotter sur le collecteur 12 lorsque le rotor 2 est en rotation, ce qui permet d'alimenter le rotor 2 par commutation du courant électrique dans les sections du rotor 2.

Le contacteur 17 comprend, outre la borne 15 reliée au balai 14, une borne 29 reliée, via un élément de liaison électrique, à une alimentation électrique du véhicule, notamment une batterie.

Le démarreur 1 comporte en outre un ensemble lanceur 19 monté de manière coulissante sur un arbre d'entraînement 18 et pouvant être entraîné en rotation autour de l'axe X par le rotor 2.

Un ensemble réducteur de vitesses 20 est interposé entre un arbre du rotor 2 et l'arbre d'entraînement 18. En variante, le démarreur pourra toutefois être à entraînement direct sans réducteur interne. L'ensemble lanceur 19 comporte un élément d'entraînement formé par un pignon 21 et destiné à s'engager sur un organe d'entraînement du moteur thermique, tel qu'une couronne d'entraînement. En variante, il serait possible d'utiliser un système à poulie.

L'ensemble lanceur 19 comprend en outre une roue libre 22 et une rondelle 23 définissant entre elles une gorge 24 pour recevoir l'extrémité 25 d'un levier de commande 27.

Le levier de commande 27 est actionné par le contacteur 17 pour déplacer l'ensemble lanceur 19 par rapport à l'arbre d'entraînement 18, suivant l'axe X, entre une première position dans laquelle l'ensemble lanceur 19 est désengagé de la couronne d'entraînement du moteur thermique, et une deuxième position dans laquelle l'ensemble lanceur 19 entraîne le moteur thermique par l'intermédiaire du pignon d'entrainement 21. Lors de l'activation du contacteur 17, une plaque de contact interne (non représentée) permet d'établir une connexion entre les bornes 15 et 29 afin de mettre sous tension le moteur électrique du démarreur 1.

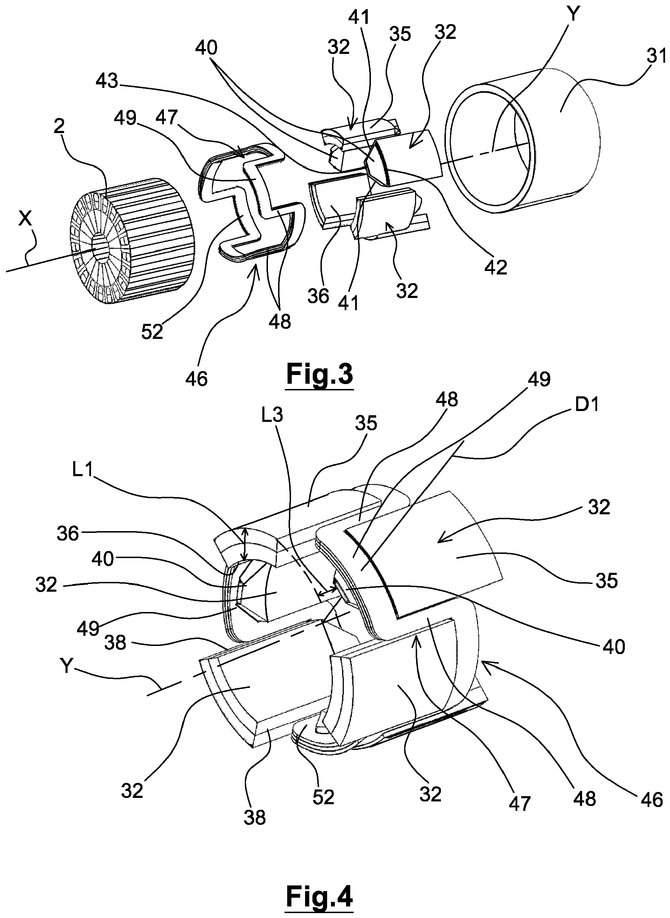

Comme on peut le voir sur les figures 2 et 3, le stator 3 comprend une culasse 31 et des noyaux polaires 32 répartis angulairement de manière régulière sur une face interne de la culasse 31.

Plus précisément, les noyaux polaires 32 s'étendent radialement par rapport à une périphérie interne de la culasse 31 en direction d'un axe Y de la culasse 31 correspondant à l'axe du stator 3. Les noyaux polaires 32 présentent globalement chacun une forme de parallélépipède ayant une face externe 35 incurvée pour épouser la forme courbe de la culasse 31 et une face interne 36 incurvée de manière à définir un entrefer 37 sensiblement constant avec une périphérie externe du rotor 2. Les flancs latéraux 38 d'extension longitudinales des noyaux polaires 32 convergent en direction de l'axe Y de la culasse 31, comme cela est visible sur la figure 4. Les noyaux polaires 32 présentent une épaisseur L1 sensiblement constante.

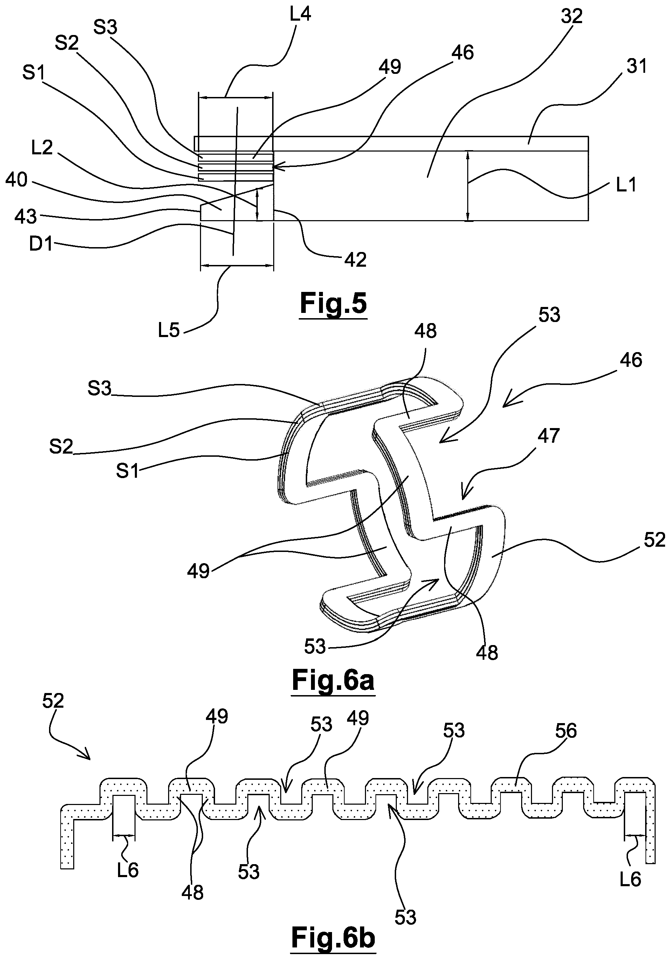

Les noyaux polaires 32 sont prolongés chacun par une semelle 40 de forme globalement trapézoïdale. Tel que montré sur la figure 3, les semelles 40 présentent des bords latéraux 41 convergents dans une direction opposée à celles des noyaux polaires 32. Suivant la circonférence du stator 3, les semelles 40 s'étendent alternativement axialement du côté avant et du côté arrière du stator 3. Comme on peut le voir clairement sur la figure 5, les semelles 40 présentent une épaisseur L2 réduite par rapport à l'épaisseur L1 des noyaux polaires 32. L'épaisseur L2 des semelles 40 est de préférence décroissante lorsqu'on se déplace de la base 42 de grande largeur de la semelle 40 vers l'extrémité libre 43 de la semelle 40 de plus petite largeur.

En outre, comme cela est bien visible sur la figure 4, deux noyaux polaires 32 adjacents sont décalés axialement l'un par rapport à l'autre, c'est-à-dire que l'extrémité libre 43 d'une semelle 40 est décalée axialement suivant une distance L3 par rapport à l'extrémité opposée d'un noyau 32 adjacent monté tête-bêche. Autrement dit, il existe un décalage axial des bords intérieurs des pôles successifs. Deux noyaux polaires 32 adjacents se chevauchent ainsi axialement l'un par rapport à l'autre.

Un bobinage 46 présente des ondulations axiales 47 de façon à passer entre les noyaux polaires 32. Le bobinage 46 présente ainsi une alternance de portions internes 48 situées entre deux noyaux polaires 32 adjacents et de portions de liaison 49 reliant électriquement entre elles deux portions internes 48 adjacentes.

Chaque portion de liaison 49 est superposée radialement au moins partiellement avec une semelle 40 correspondante. On considère que deux éléments sont superposés radialement lorsqu'une droite D1 d'orientation radiale passant par un des éléments coupe l'autre élément, tel que montré sur les figures 4 et 5. De préférence, chaque portion de liaison 49 présente une largeur L4 au moins égale à 70% de la longueur axiale L5 d'une semelle 40 correspondante. Dans l'exemple de réalisation représenté sur la figure 5, la largeur L4 de chaque portion de liaison 49 est sensiblement égale à la longueur axiale L5 d'une semelle 40 correspondante.

Le bobinage 46 est avantageusement formé par une bande continue 52 enroulée sur plusieurs spires S1-S3 de manière spirale, c'est-à-dire à rayon croissant ou décroissant de spire à spire. Cela constitue ainsi un bobinage feuilleté suivant lequel les bords de l'ensemble des spires S1-S3 coïncident les uns par rapport aux autres. Autrement dit, le bobinage 46 est formé par un conducteur unique enroulé en spiral. Comme on peut le voir sur les figures 6a et 6b, la bande 52 comporte des échancrures 53 ouvertes alternativement du côté avant et du côté arrière du stator 3 pour former les ondulations axiales 47 du bobinage 46. Afin d'adapter les différentes spires S1-S3 de la bande 52 enroulée à la dimension radiale des noyaux polaires 32, une largeur L6 des échancrures 53 varie d'une spire à l'autre, c'est-à-dire d'un tour à l'autre de l'enroulement de la bande 52. En effet, la largeur L6 des échancrures 53 augmente progressivement d'une spire à l'autre. Pour obtenir une telle configuration d'échancrures, le bobinage 46 pourra être réalisé via un procédé de poinçonnage à pas progressif. En variante, le bobinage 46 est réalisé à partir d'une forme en méplat bobinée sur chant.

La bande 52 pourra être réalisée en aluminium ou en cuivre. De préférence, la bande 52 est réalisée dans un matériau à base d'aluminium qui présente l'avantage d'être facile à découper et à déformer pour obtenir l'enroulement de spires.

Dans l'exemple de réalisation, le bobinage 46 correspond à un enroulement global de trois spires S1-S3 de la bande 52 montées électriquement en série. Les trois spires sont ainsi formées par une seule et même pièce. Le nombre de spires pourra bien entendu être adapté en fonction de l'application. La bande 52 est recouverte d'un matériau électriquement isolant 56 (cf. figure 6b). Cela permet d'isoler électriquement le bobinage 46 par rapport aux noyaux polaires 32 et à la culasse 31 du stator 3. Le matériau isolant 56 est constitué par exemple par de l'émail et/ou un papier isolant ou obtenu par anodisation de l'aluminium. En variante, le matériau isolant 56 pourra être surmoulé autour de la bande 52 électriquement conductrice.

Lorsque le bobinage 46 est parcouru par un courant, il produit un champ inducteur de manière à former une alternance de pôles Nord et de pôles Sud suivant la circonférence du stator 3. Dans l'exemple illustré, la machine électrique tournante comporte six noyaux polaires 32, donc six pôles. En variante, la machine électrique tournante pourra comporter un nombre différent de pôles, comme par exemple quatre pôles ou plus de six pôles.

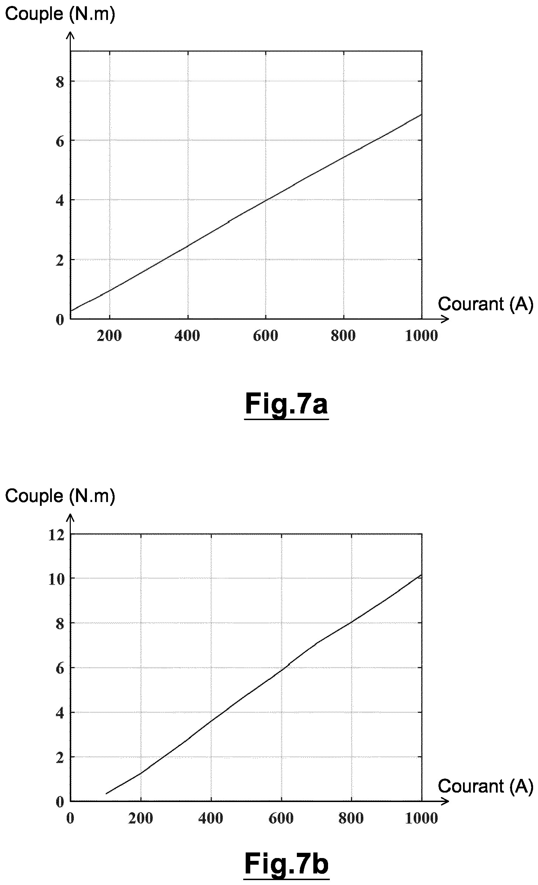

Comme cela ressort des figures 7a et 7b, la forme des noyaux polaires 32 chevauchés combinée à l'utilisation du bobinage 46 permet d'augmenter de manière substantielle le couple généré par le démarreur 1 pour un courant de 1000 Ampères correspondant au courant de démarrage du moteur électrique par rapport à un démarreur selon l'état de la technique muni de noyaux polaires 32 non-chevauchés et d'un bobinage annulaire. En effet, le couple généré à 1000A est de l'ordre de 10N.m pour un démarreur selon l'invention (cf. courbe de la figure 7b) alors qu'il est seulement de l'ordre de 7N.m pour un démarreur selon l'état de la technique (cf. courbe 7a).

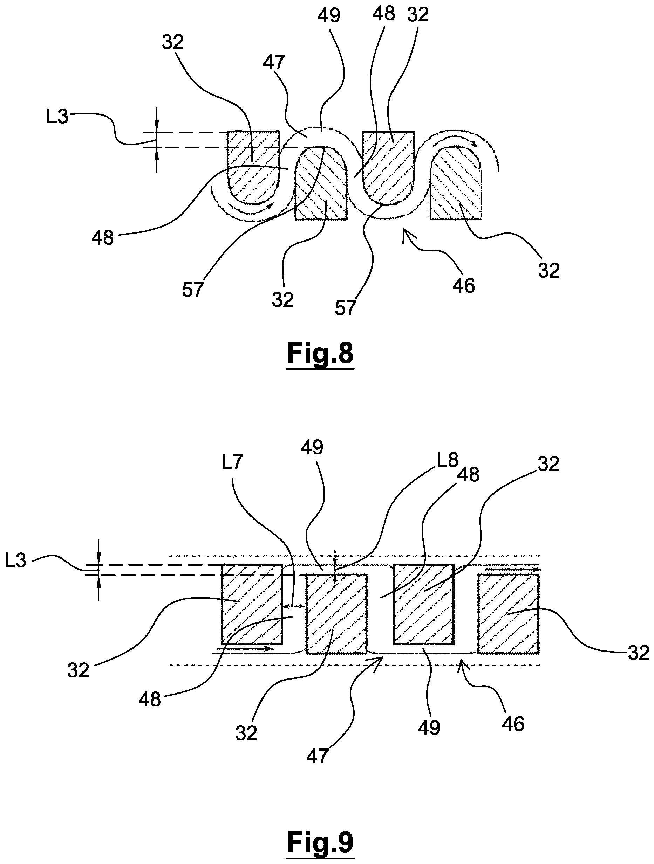

Dans le mode de réalisation de la figure 8, les noyaux polaires 32 présentent chacun un bord d'extrémité 57 arrondi du côté d'une zone de contact avec le bobinage 46. Cela permet de diminuer la longueur du trajet efficace des lignes de champ de la densité de courant. On réduit ainsi la résistance du bobinage à travers le volume total de l'enroulement inducteur ainsi que les pertes énergétiques correspondantes égales à Ri^2.

Dans le mode de réalisation de la figure 9, une section L7 des portions internes 48 du bobinage 46 et une section L8 des portions de liaison 49 du bobinage 46 sont différentes l'une par rapport l'autre.

Dans une variante de réalisation, les noyaux polaires 32 sont prolongés chacun par un épanouissement s'étendant circonférentiellement de part et d'autre de la portion centrale.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Démarreur (1) pour moteur thermique d'un véhicule automobile comportant:
- un stator (3) inducteur comprenant une culasse (31) et des noyaux polaires (32) s'étendant radialement par rapport à une périphérie interne de ladite culasse (31) en direction d'un axe (Y) de ladite culasse (31), et
- un bobinage (46),
**caractérisé en ce que** deux noyaux polaires (32) adjacents sont décalés axialement l'un par rapport à l'autre, et **en ce que** ledit bobinage (46) présente des ondulations axiales (47) de façon à passer entre lesdits noyaux polaires (32), ledit bobinage (46) étant formé par une bande (52) enroulée sur plusieurs spires (S1-S3) de manière spirale, ladite bande (52) comportant des échancrures (53) ouvertes alternativement d'un côté et de l'autre dudit stator (3) pour former lesdites ondulations axiales (47) dudit bobinage (46).

2. Démarreur selon la revendication 1, **caractérisé en ce qu'**une largeur (L6) desdites échancrures (53) varie d'une spire à l'autre dudit bobinage (46).

3. Démarreur selon la revendication 1 ou 2, **caractérisé en ce que** lesdits noyaux polaires (32) sont prolongés chacun par une semelle (40), lesdites semelles (40) s'étendant alternativement axialement d'un côté et de l'autre dudit stator (3).

4. Démarreur selon la revendication 3, **caractérisé en ce que** lesdites semelles (40) présentent des bords latéraux (41) convergents dans une direction opposée à celle desdits noyaux polaires (32).

5. Démarreur selon l'une quelconque des revendications 1 à 4, **caractérisé en ce que** ladite bande (52) est réalisée en aluminium ou en cuivre.

6. Démarreur selon l'une quelconque des revendications 1 à 5, **caractérisé en ce que** ledit bobinage (46) correspond à un enroulement global de trois spires (S1-S3) de ladite bande (52) montées électriquement en série.

7. Démarreur selon l'une quelconque des revendications 1 à 6, **caractérisé en ce que** ladite bande (52) est recouverte d'un matériau électriquement isolant (56).

8. Démarreur selon la revendication 7, **caractérisé en ce que** ledit matériau électriquement isolant (56) est constitué par de l'émail et/ou un papier isolant.

9. Démarreur selon l'une quelconque des revendications 1 à 8, **caractérisé en ce que** lesdits noyaux polaires (32) présentent des flancs latéraux (38) d'extension longitudinales (32) convergents en direction dudit axe (Y) de ladite culasse (31).

10. Démarreur selon l'une quelconque des revendications 1 à 9, **caractérisé en ce que** lesdits noyaux polaires (32) présentent chacun un bord d'extrémité (57) arrondi du côté d'une zone de contact avec ledit bobinage (46).

11. Démarreur selon l'une quelconque des revendications 1 à 10, **caractérisé en ce qu'**une section (L7) de portions internes (48) dudit bobinage (46) situées entre deux noyaux polaires (32) adjacents et une section (L8) de portions de liaison (49) dudit bobinage (46) reliant électriquement entre elles deux portions internes (48) adjacentes sont différentes l'une par rapport l'autre.
